# EUROPEAN PATENT APPLICATION

(11) **EP 4 603 976 A2**
(43) Date of publication of application: **20.08.2025**
(21) Application number: 24206934.2
(22) Date of filing: 16.10.2024
(51) Int. Cl.: G06F 11/10

(54) **REDUNDANT ARRAY OF INEXPENSIVE DISK (RAID) SYSTEM**

(30) Priority: 16.02.2024 KR 20240022349
(71) Applicant: Samsung Electronics Co., Ltd, Suwon-si, Gyeonggi-do 16677 (KR)
(72) Inventor: SON, Min Woo, 16677 Suwon-si, Gyeonggi-do (KR); LEE, Kyung Duk, 16677 Suwon-si, Gyeonggi-do (KR)
(74) Representative: Kuhnen & Wacker Patent- und Rechtsanwaltsbüro PartG mbB

(57) **Abstract**

There is provided a memory device in which product reliability is improved in a Redundant Array of Inexpensive Disk (RAID) system implemented by only nonvolatile memory devices without a volatile memory. The RAID system includes a plurality of nonvolatile memory devices including a plurality of planes for storing a data chunk and parity data and a RAID controller accessing the nonvolatile memory device in a plane independent read (PIR) mode, wherein the RAID controller transmits, to the nonvolatile memory device, a first read command and a first address, transmits a second read command and a second address, transmits an XOR enable command, receives first data corresponding to the first address from a first plane and receives second data corresponding to the second address from a second plane, and transmits an input command and a third address to the nonvolatile memory device.

## Description

### CROSS-REFERENCE TO RELATED APPLICATION

This application claims priority to Korean Patent Application No. 10-2024-0022349 filed in the Korean Intellectual Property Office on February 16, 2024, the contents of which in its entirety are herein incorporated by reference.

### BACKGROUND

Recently, a storage device, such as a solid state drive (SSD), has been widely used. The storage device may correspond to a memory system that includes a nonvolatile memory device, such as a flash memory, and a memory controller for controlling the nonvolatile memory device. The nonvolatile memory device may transmit/receive input/output signals to/from the memory controller through pins predefined in accordance with a protocol. For example, the nonvolatile memory device may receive a command and an address from the memory controller through specific input/output pins and transmit/receive data to/from the memory controller through the same input/output pins.

A Redundant Array of Inexpensive Disk (RAID) system is widely used to improve product reliability by distributing and storing data and parity in a plurality of storage devices. A volatile memory for storing a result of rebuild computation may be required for a rebuild operation related to error correction of the RAID system.

However, when the RAID system needs to be implemented using multiple storage devices, such as SSD without a volatile memory, an operation speed becomes slower to temporarily store the result of rebuild computation in the nonvolatile memory than the case that the volatile memory is used.

### SUMMARY

In general, in some aspects, the present disclosure is directed toward a memory device in which product reliability is improved in a RAID system implemented by only nonvolatile memory devices without a volatile memory.

The RAID system may improve product reliability by generating and storing parity data in a parity plane in a nonvolatile memory device even though the RAID system is implemented to include only nonvolatile memory devices without a volatile memory. Additionally, the RAID system may sequentially transmit a read command and an output command for a current plane even before a data output of the other plane is completed, whereby the RAID system with improved speed may be provided using only a nonvolatile memory.

According to some implementations, the present disclosure is directed to a RAID system comprising a plurality of nonvolatile memory devices including a plurality of planes for storing a data chunk and parity data and a Redundant Array of Inexpensive Disk (RAID) controller accessing the nonvolatile memory device in a plane independent read (PIR) mode, wherein the RAID controller transmits, to the nonvolatile memory device, a first read command and a first address, transmits a second read command and a second address, transmits an XOR enable command, receives first data corresponding to the first address from a first plane and receives second data corresponding to the second address from a second plane, and transmits an input command and a third address to the nonvolatile memory device.

According to some implementations, the present disclosure is directed to a RAID system comprising a plurality of nonvolatile memory devices including a plurality of planes for storing a data chunk and parity data, a RAID controller accessing the nonvolatile memory device through an independent command-address signal line (CA) and a data signal line (DQ), wherein the RAID controller transmits an XOR enable command to the command-address signal line, transmits a first read command and a first address to the command-address signal line, outputs a first output command and the first address, transmits a second read command and a second address to the command-address signal line, outputs a second output command and the second address, receives first data corresponding to the first address from a first plane and second data corresponding to the second address from a second plane through the data signal line, and transmits an input command and a third address through the command-address signal line.

According to some implementations, the present disclosure is directed to a RAID system comprising a nonvolatile memory device including a normal plane and a parity plane, and a RAID controller individually performing a read operation for each of the normal plane and the parity plane, wherein the RAID controller reads first sub-stripe data of a first normal plane and second sub-stripe data of a second normal plane, inputs the first sub-stripe data and the second sub-stripe data to the parity plane, and programs parity data obtained by XOR computation for the first sub-stripe data and the second sub-stripe data to the parity plane.

### BRIEF DESCRIPTION OF THE DRAWINGS

Example implementations will be clearly understood from the following detailed description, taken in conjunction with the accompanying drawings.
FIG. 1 is a block diagram illustrating an example of a RAID system according to some implementations.
FIG. 2 illustrates an example of a RAID system 1' of FIG. 1 according to some implementations.
FIG. 3 is a conceptual view illustrating an example of a rebuild operation in a memory system 100 according to some implementations.
FIG. 4 is a flow chart illustrating an example of an operation method of a RAID system according to some implementations.
FIG. 5 is a signal view illustrating an example of a data read operation depending on a PIR mode, and FIG. 6 is a flow chart illustrating an example of an operation method of a RAID system according to some implementations.
FIGS. 7A to 7C are signal views illustrating an example of an operation method of a RAID system according to some implementations.
FIG. 8 is a flow chart illustrating an example of an operation method of a RAID system when the RAID system includes an uncorrectable error in accordance with some implementations.
FIG. 9 illustrates an example of a RAID system 1" of FIG. 1 according to some implementations.
FIG. 10 is a flow chart illustrating an example of an operation method of a RAID system according to some implementations.
FIG. 11 is a signal view illustrating an example of a data read operation depending on an SCA mode, and FIG. 12 is a flow chart illustrating an example of an operation method of a RAID system in an SCA mode in accordance with some implementations.
FIGS. 13A and 13B are signal views illustrating an example of an operation method of a RAID system according to some implementations.
FIG. 14 is a flow chart illustrating an example of an operation method of a RAID system when the RAID system includes an uncorrectable error in accordance with some some implementations.
FIG. 15 is a flow chart illustrating an example of an operation method of a RAID system according to some implementations.
FIGS. 16A and 16B are signal views illustrating an example of an operation method of a RAID system according to the example of FIG. 15 according to some implementations.
FIG. 17 is a signal view illustrating an example of an operation method of a RAID system in a PIR mode and an SCA mode in accordance with some implementations.
FIG. 18 is a block diagram illustrating an example of a RAID system 2 according to some implementations.
FIG. 19 is a block diagram illustrating an example of a computing system according to some implementations.

### DETAILED DESCRIPTION

Hereinafter, example implementations will be explained with reference to the accompanying drawings.

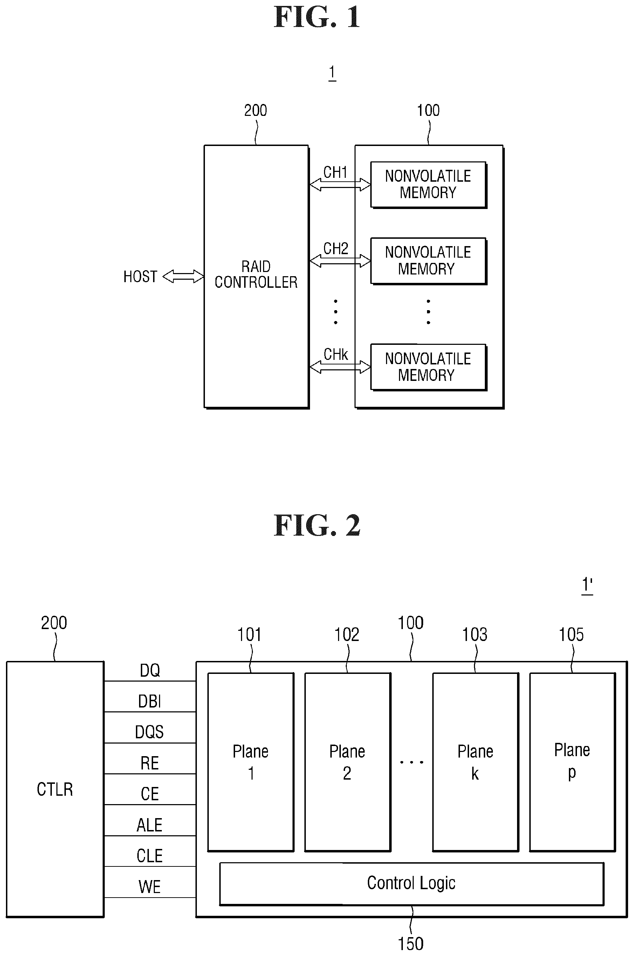

FIG. 1 is a block diagram illustrating an example of a RAID system according to some implementations. In FIG. 1, a Redundant Array of Inexpensive Disk (RAID) system 1 includes a memory system 100 and a RAID controller 200. The memory system 100 may include, for example, a plurality of nonvolatile memory devices. Such a plurality of nonvolatile memory devices may perform communication with the RAID controller 200 through, for example, first to kth channels CH1 to CHk. The plurality of nonvolatile memory devices included in the memory system 100 may be, for example, a NAND flash memory, but the present disclosure is not limited thereto.

In some implementations, each of the plurality of nonvolatile memory devices included in the memory system 100 may be a single solid state drive (SSD). For example, the memory system 100 may include a plurality of SSDs composed of one RAID.

The RAID controller 200 may be coupled to a host HOST and the memory system 100. In response to a request from the host HOST, the RAID controller 200 may be configured to access the memory system 100. For example, the RAID controller 200 may be implemented to control the overall operation of the RAID system 1. The RAID controller 200 may perform various management operations, such as cache/buffer management, firmware management, garbage collection management, wear leveling management, data deduplication removal management, read refresh/reclaim management, bad block management, multi-stream management, mapping management of host data and a nonvolatile memory, quality of service (QoS) management, system resource allocation management, nonvolatile memory queue management, read level management, erase/program management, hot/cold data management, power loss protection management, dynamic heat management, initialization management, and redundant array of inexpensive disk (RAID) management.

Additionally, the RAID controller 200 may be configured to provide an interface between the memory system 100 and the host HOST. Also, the RAID controller 200 may be configured to drive firmware for controlling the memory system 100.

For example, the RAID controller 200 may further include well-known components such as a random access memory (RAM), a processing unit, a host interface and a memory interface. In this case, the RAM may be used as at least one of a working memory of the processing unit, a cache memory between the memory system 100 and the host HOST or a buffer memory between the memory system 100 and the host HOST, and the processing unit may control the overall operation of the RAID controller 200.

Meanwhile, the RAID controller 200 according to the present embodiment may perform RAID rebuild for the memory system 100. In detail, the RAID controller 200 may perform RAID rebuild for the memory system 100 in a unit of stripe. The rebuild operation performed by the RAID controller 200 for the memory system 100 will be described in more detail below.

The host interface may include a protocol for performing data exchange between the host HOST and the RAID controller 200. For example, the RAID controller 200 may be configured to perform communication with the host HOST through at least one of various interface protocols such as a Universal Serial Bus (USB) protocol, a Multimedia Card (MMC) protocol, a Peripheral Component Interconnection (PCI) protocol, a PCI-express (PCI-E) protocol, an Advanced Technology Attachment (ATA) protocol, a Serial-ATA protocol, a Parallel-ATA protocol, a Small Computer Small Interface (SCSI) protocol, an Enhanced Small Disk Interface (ESDI) protocol and an Integrated Drive Electronics (IDE) protocol.

In some implementations, the RAID controller 200 and the memory system 100 may be integrated into a single semiconductor device. For example, the RAID controller 200 and the memory system 100 may be integrated into a single semiconductor device to constitute a memory card.

Additionally, the RAID controller 200 and the memory system 100 may be integrated into a single semiconductor device to constitute a semiconductor drive (solid state drive (SSD)). When the RAID controller 200 and the memory system 100 are integrated into a single semiconductor device and used as a semiconductor drive SSD, the operating speed of the host HOST connected to the nonvolatile memory system may be significantly improved, but the present disclosure is not limited thereto. The RAID controller 200 and the memory system 100 may be physically separated from each other to be detachable.

Unlike the above example, the RAID controller 200 and the memory system 100 may be integrated into a single semiconductor device to configure a memory card, such as a personal computer memory card international association (PCMCIA) card, a compact flash card (CF), a smart media card (SM, SMC), a memory stick, a multimedia card (MMC, RS-MMC, MMCmicro), an SD card (SD, miniSD, microSD, SDHC), and a universal flash memory (UFS).

As another example, the nonvolatile memory systems may be provided as one of various components of electronic devices, such as a computer, Ultra Mobile PC (UMPC), a workstation, a net-book, Personal Digital Assistants (PDAs), a portable computer, a web tablet, a wireless phone, a mobile phone, a smart phone, e-book, a portable multimedia player (PMP), a portable game console, a navigation device, a black box, a digital camera, a three-dimensional television, a digital audio recorder, a digital audio player, a digital picture recorder, a digital picture player, a digital video recorder, a digital video player, a device capable of transmitting and receiving information in a wireless environment, one of various electronic devices constituting a home network, one of various electronic devices constituting a computer network, one of various electronic devices constituting a telematics network, an RFID device, or one of various components constituting a computing system.

Illustratively, the memory system 100 may be packaged in various forms. For example, the memory system 100 may be packaged in such a manner as Package on Package (PoP), Ball grid arrays (BGAs), Chip scale packages (CSPs), Plastic Leaded Chip Carrier (PLCC), Plastic Dual In Line Package (PDIP), Die in Waffle Pack, Die in Wafer Form, Chip On Board (COB), Ceramic Dual In Line Package (CERDIP), Plastic Metric Quad Flat Pack (MQFP), Thin Quad Flatpack Package (TQFP), Small Outline Integrated Circuit (SOIC), Shrink Small Outline Package (SSOP), Thin Small Outline Package (TSOP), Thin Quad Flatpack Package (TQFP), System In Package (SIP), Multi Chip Package (MCP), Wafer-level Fabricated Package (WFP) and Wafer-Level Processed Stack Package (WSP).

FIG. 2 illustrates an example of a RAID system 1' of FIG. 1 according to some implementations. In FIG. 2, the RAID controller 200 may transmit and receive signals to and from the memory system 100 through a plurality of pins. The plurality of pins may transmit, for example, DQ, DBI, DQS, RE, CE, ALE, CLE and WE signals. The memory system 1 may include a plurality of nonvolatile memory devices 101, 102, 103,...105 and a control logic circuit 150. The control logic circuit 150 performs an operation according to the control of the RAID controller 200 by accessing the plurality of nonvolatile memory devices 101, 102, 103,...105 in accordance with signals transmitted and received through first to eighth pins.

The DQ signal may be as data signals, which may transfer a command CMD, an address ADDR and data DATA. The DQ signal may be transferred through a plurality of data signal lines. The DBI signal is a data bus conversion signal, and the RAID controller 200 and the memory system 100 may transmit and receive data for which a data bus conversion computation or a data masking computation is performed. For example, data may be encrypted for security or privacy. The DQS signal is a data strobe signal, and the RE signal is a read enable signal and may be input as a data output control signal when data is read from the nonvolatile memory device. The RE signal may be used to generate the DQS signal. The CE signal is a chip enable signal, and is a signal that the RAID controller 200 selectively activates and accesses at least one of the nonvolatile memory devices 101 to 105. The CLE signal is a command latch enable signal, the ALE signal is an address latch enable signal, and the CLE signal is enabled when the command CMD is included in the DQ signal, the ALE signal is enabled when the address ADDR is included in the DQ signal, and the CLE signal or the ALE signal is disabled when normal data is transmitted to the DQ signal. The WE signal is a write enable signal, and the RAID controller 200 may transmit the data signal DQ including the command CMD or the address ADDR and the switched write enable signal WE to the memory system 100.

For example, the memory system 100 may perform a program operation/read operation/erase operation by latching the command CMD or the address ADD at the edge of the WE signal in accordance with the CLE signal and the ALE signal. For example, during a read operation, the CE signal is activated, the CLE signal is activated at a transmission period of a command, the ALE signal is activated at a transmission period of an address, and the RE signal may be toggled at a period at which data is transmitted through the data signal line DQ. The DQS signal may toggle at a frequency corresponding to the data input/output speed. The read data may be sequentially transmitted in synchronization with the data strobe signal DQS.

Each of a plurality of nonvolatile memory devices 101, 102, 103,...105 may include at least one plane, and the memory system 100 may support a plane independent command (PIC).

The control logic circuit 150 may be implemented to control an operation of each of the planes 101, 102, 103,...105. In particular, the control logic circuit 150 may receive an extended status check command from the RAID controller 200, and may output status information of the planes 101, 102, 103,...105 in response to the extended status check command. Also, the control logic circuit 150 may store status information of the planes 101, 102, 103,...105. In this case, the status information may be information corresponding to ready and busy (RnB) signals of each plane.

In some implementations, plane status information may be output to the data lines DQ in response to the toggled RE signal, but it should be understood that the output of the plane status information of the present disclosure is not limited thereto.

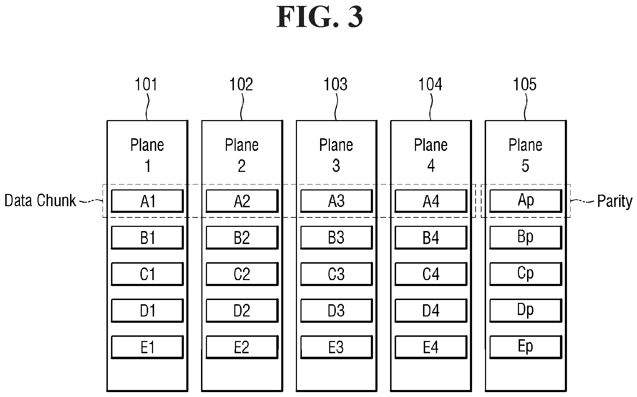

FIG. 3 is a conceptual view illustrating an example of a rebuild operation in the memory system 100 according to some implementations. In FIG. 3, the RAID controller 200 divides data in a unit of stripe and distributes and stores each stripe in each of the planes 101, 102, 103,...105 in a unit of sub-stripe. The RAID controller 200 may generate parity to generate data in a unit of stripe. For example, a data chunk of A is distributed in a unit of sub-stripe of A1, A2, A3 and A4 and is stored in each of the plane 101, the plane 102, the plane 103 and the plane 104. A parity Ap for the data chunk A is generated and then stored in the plane 105. When an error occurs in A2, A2 is recovered based on A1, A3, A4 and Ap.

According to some implementations, the number of sub-stripes corresponding to parity or a configuration method thereof may be configured differently depending on a RAID type. Each sub-stripe may include at least one sub-stripe that enables ECC decoding.

RAID may be of various levels. According to some implementations, the RAID may be any one of RAID level 0 (Striped set without parity or Striping), RAID level 1 (Mirrored set without parity or Mirroring), RAID level 2 (Hamming code parity), RAID level 3 (Striped set with dedicated parity, bit interleaved parity, or byte level parity), RAID level 4 (Block level parity), RAID level 5 (Striped set with distributed parity or interleave parity), RAID level 6 (Striped set with dual distributed parity), RAID level 7, RAID level 10, and RAID level 53, or may be a merged RAID level (e.g., RAID 0+1, RAID 1+0, RAID 5+0, RAID 5+1 or RAID 0+1+5) of at least two of the above RAID levels.

According to some implementations, the RAID controller 200 may store an intermediate value of a rebuild computation or a result value of the rebuild computation in any one plane. That is, the RAID controller 200 may store the result of XOR computation between the sub-stripe data. Hereinafter, for convenience of description, in the present disclosure, a result value of the rebuild computation will be referred to as parity data, and a plane in which parity data is stored will be referred to as a parity plane.

According to some implementations, when conversion to all sub-stripe data A1, A2, A3 and A4 for the data chunk A is completed, the RAID controller 200 may enable an XOR operation between the sub-stripe data, and after the XOR operation for all sub-stripe data A1, A2, A3 and A4 is completed, the RAID controller 200 may write the result of XOR computation to the parity plane 105.

For example, the RAID system 1 may store the result of XOR computation in a working memory (e.g., DRAM) and then store the same in the parity plane (e.g., plane 105). However, when the RAID system 1 does not have a working memory device, for example, when the RAID controller 200 does not have a working memory device, it is difficult to perform a recovery operation of the data chunk, that is, a rebuild operation, by using the result of XOR computation.

However, the RAID system 1 having no working memory device may store the result of XOR computation in a plane by using plane independent read (PIR) or separate command/address (SCA) characteristics.

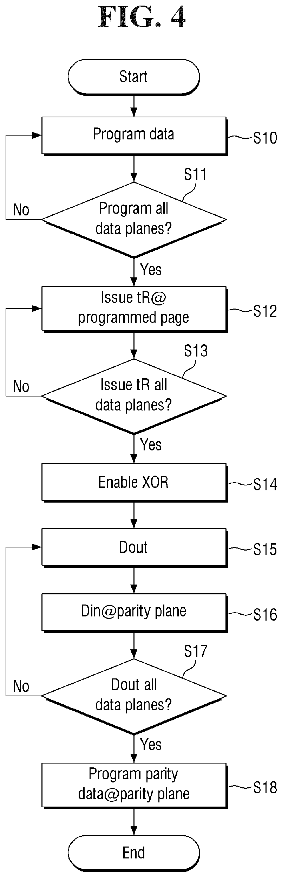

At this time, the RAID controller 200 may program the result of XOR computation to the plane 105 without using a separate working memory. For example, in a plane independent read (PIR) mode, the RAID controller 200 may perform an access operation for each of a plurality of planes PL1 to PLN independently or in parallel. Accordingly, the RAID controller 200 may perform an access operation for the second plane 102 simultaneously while performing an access operation for the first plane 101. A process for storing the result of XOR computation in the plane 105 without a separate working memory will be described below with reference to FIG. 4 in accordance with some implementations.

FIG. 4 is a flow chart illustrating an example of an operation method of a RAID system according to some implementations. In FIG. 4, the RAID system 1 individually transmits a program (or write) command to each plane for a plurality of sub-stripe data for one data chunk (S10). The nonvolatile memory device 100 receives the program command and the sub-stripe data and performs a write operation of storing all sub-stripe data of the data chunk in each plane (S11)

The RAID controller 200 transmits a read command to the nonvolatile memory device, for example, each plane 100 (S12). The read command is transmitted to all planes (e.g., 101, 102 and 103), respectively, corresponding to an address in which sub-stripe data to be read is stored in the nonvolatile memory device 100 (S13). After the read command is output to all planes (S13, Yes), the RAID controller 200 activates the XOR computation (S14).

When the sub-stripe data is output from each plane (S15), the RAID controller 200 inputs each of the output sub-stripe data to the parity plane 105 (S16). When one data chunk, that is, all sub-stripe data are completely output (S17, Yes), parity data obtained by performing XOR computation for all sub-stripe data input to the parity plane 105 is generated and programmed to the parity plane (S18).

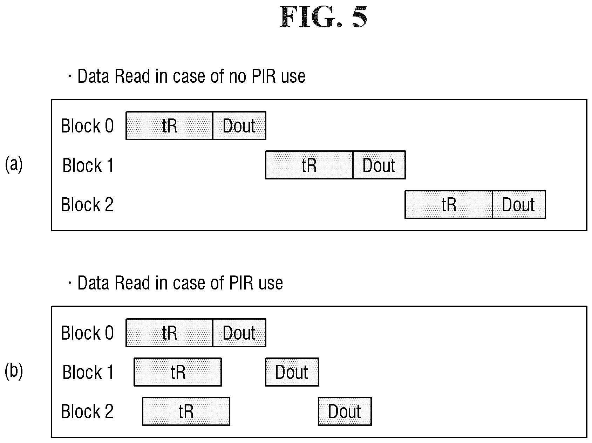

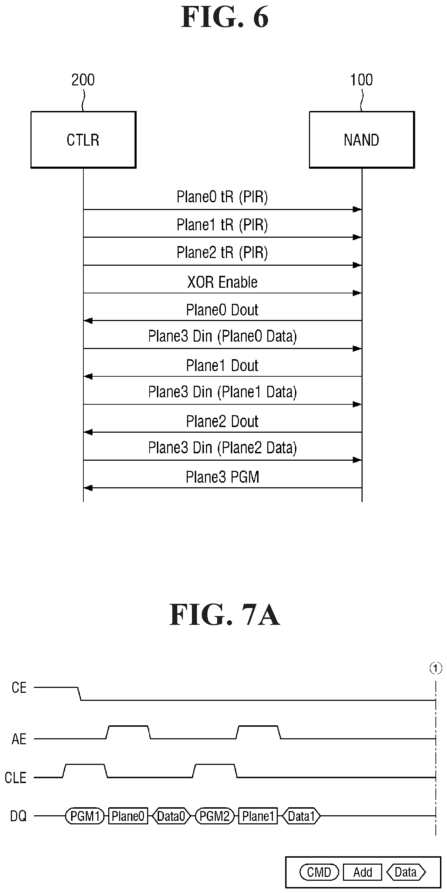

FIG. 5 is a signal view illustrating an example of a data read operation depending on a PIR mode, and FIG. 6 is a flow chart illustrating an example of an operation method of a RAID system according to some implementations. For convenience of description, for example, it is assumed that a data chunk A is stored in plane 0, plane 1 and plane 2 as A1, A2 and A3, respectively, and parity data Ap is stored in plane 3.

When the RAID controller 200 does not use the plane independent read (PIR) mode, the nonvolatile memory device 100 should output sub-stripe data corresponding to the read command tR for each plane/block (DOut) after transmitting a read command tR as shown in FIG. 5(a). In this case, the sub-stripe data corresponding to the read command tR is output from next plane/block (DOut). That is, A1 is output after the read command is transmitted to block 0, A2 is output after the read command is transmitted to block 1, and A3 is output after the read command is transmitted to block 2. When not in the PIR mode, the RAID controller performs XOR computation in parity block 3 after receiving all the sub-stripe data A1 to A3, and stores parity data in the parity block.

However, when the RAID controller 200 uses the plane independent read (PIR) mode, each of the nonvolatile memory devices 101,...105 may perform operations for a plurality of planes PL1 to PLN independently or in parallel. That is, as shown in FIG. 5(b), even before a data output of block 0 is completed, the read command may be transmitted to block 1. That is, after the read command is transmitted to block 0, the corresponding sub-stripe data 0 is output, and even before the data output of block 0 is completed, the read command of block 0 is transmitted and then the read command may be transmitted to block 1. The sub-stripe data 1 is output after the sub-stripe data 0 is completely output. Likewise, the read command is transmitted to block 2 after the read command is transmitted to block 1, and the sub-stripe data 2 is output after the sub-stripe data 1 is completely output.

In FIG. 6, when the data chunk is stored in plane 0, plane 1 and plane 2 in the plane independent read (PIR) mode, the RAID controller 200 transmits the read command to plane 0, transmits the read command to plane 1 and transmits the read command to plane 2.

The RAID controller 200 transmits an XOR enable signal to the nonvolatile memory device 100, and when sub-stripe data is received from each plane to correspond to the order in which the read command is transmitted, the RAID controller 200 transfers the sub-stripe data to a parity plane. For example, the RAID controller 200 outputs sub-stripe data A1 to plane 3 when the sub-stripe data A1 is received from plane 0, outputs sub-stripe data A2 to plane 3 when the sub-stripe data A2 is received from plane 1, and outputs sub-stripe data A3 to plane 3 when the sub-stripe data A3 is received from plane 2.

The plane 3 (105) in the nonvolatile memory device 100 generates parity data Ap by performing XOR computation for the received sub-stripe data A1, A2 and A3, and programs (or writes) the parity data Ap to plane 3.

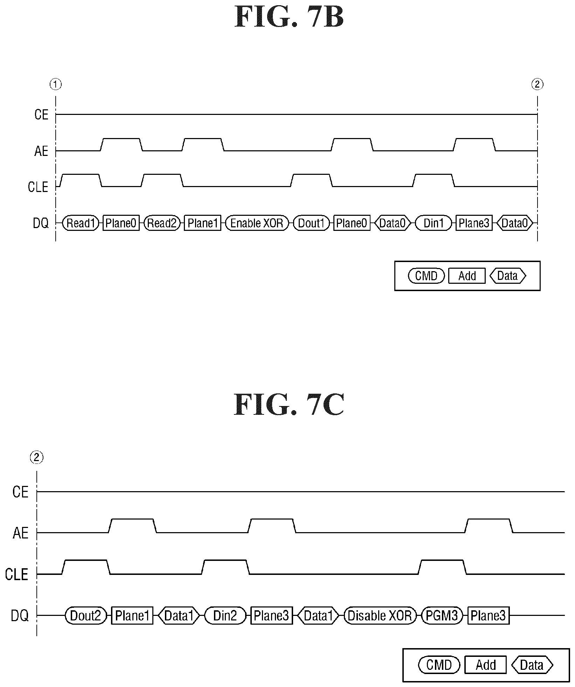

FIGS. 7A to 7C are signal views illustrating an example of an operation method of a RAID system according to some implementations. In FIGS. 7A to 7C, as the chip enable signal CE is changed from a logic high to a logic low, any one 100 of a plurality of nonvolatile memory devices, which includes planes 0 to 3, is activated.

As the DQ signal line is associated with a command latch enable signal (hereinafter, referred to as CLE signal) or an address latch enable signal (ALE signal), when the CLE signal is enabled, a command is input to the DQ signal line. When the ALE signal is enabled, an address to execute a command is input to the DQ signal line, and when both the CLE signal and the ALE signal are disabled, data is transmitted to and received from the DQ signal line. For convenience of description, it is described that the CLE signal and the ALE signal are enabled at a logic high but may be enabled at a logic low in accordance with various embodiments.

The RAID controller 200 outputs DataO while transmitting a first program command PGM1 to the DQ signal line together with the CLE signal enabled by the nonvolatile memory device 100 to which the CE signal is applied and transmitting an address Plane0 of plane 0 to the DQ signal line together with the ALE signal. Subsequently, the RAID controller 200 outputs Data1 while transmitting a second program command PGM2 to the DQ signal line together with the CLE signal and transmitting an address Plane1 of plane 1 to the DQ signal line together with the ALE signal. Therefore, the nonvolatile memory device 100 stores DataO in plane 0, and stores Data1 in plane 1.

The RAID controller 200 transmits a first read command Read1 to the DQ signal line together with the CLE signal in the PIR mode and transmits the address Plane0 of plane 0 to the DQ signal line together with the AE signal. Subsequently, the RAID controller 200 transmits a second read command Read2 to the DQ signal line together with the CLE signal and transmits the address Plane 1 of plane 1 to the DQ signal line together with the ALE signal. The RAID controller 200 sequentially transmits the read command to all planes, in which sub-stripe data is stored, and then outputs the XOR enable signal to the nonvolatile memory device 100.

The RAID controller 200 outputs a command Dout1 to output sub-stripe data and an address Plane0 of the corresponding plane to the nonvolatile memory device 100 in conjunction with the CLE signal and the AE signal, and the nonvolatile memory device 100 outputs sub-stripe data DataO stored in the corresponding plane0. The RAID controller 200 outputs a command Din1 to input the sub-stripe data DataO and an address Plane3 of a parity plane to store data to the nonvolatile memory device 100 in conjunction with the CLE signal and the AE signal, and the nonvolatile memory device 100 inputs the sub-stripe data DataO to plane 3.

The RAID controller 200 outputs a command Dout2 to output sub-stripe data and an address Plane1 of the corresponding plane to the nonvolatile memory device 100 in conjunction with the CLE signal and the AE signal, and the nonvolatile memory device 100 outputs sub-stripe data Data1 stored in the corresponding plane Plane1. The RAID controller 200 outputs a command Din2 to input the sub-stripe data Data1 and an address Plane3 of a parity plane to store data to the nonvolatile memory device 100 in conjunction with the CLE signal and the AE signal, and the nonvolatile memory device 100 inputs the sub-stripe data Data1 to plane 3.

The nonvolatile memory device 100 performs XOR computation for the sub-stripe data DataO and Data1 input to the plane 3, and when an XOR disable signal is received from the RAID controller 200, the nonvolatile memory device 100 completes the XOR computation and programs the computation result to the corresponding address of the plane 3 in accordance with the program command from the RAID controller 200.

According to the operation of the RAID system 1, the RAID controller 200 may generate and store parity data for the data chunk in the nonvolatile memory device 100 even when there is no working memory, and in case of the operation in the PIR mode, data may be accessed in parallel for each plane, so that the RAID controller 200 may generate parity data according to XOR computation more quickly than the operation in case of no PIR mode, and may store the parity data in the nonvolatile memory device 100.

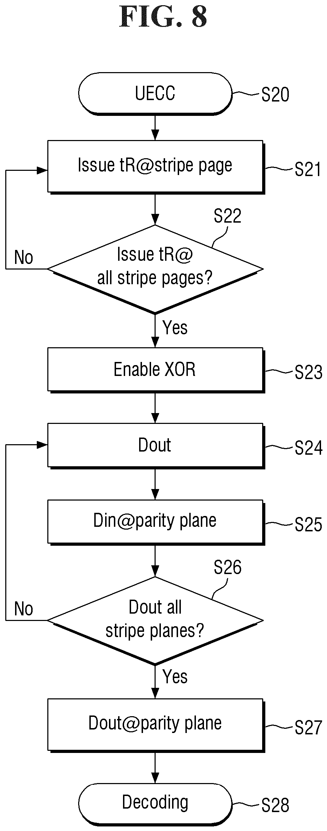

FIG. 8 is a flow chart illustrating an example of an operation method of a RAID system when the RAID system includes an uncorrectable error in accordance with some implementations. When at least one sub-stripe data of a data chunk includes an uncorrectable error, the RAID system 1 performs a correction recovery operation using parity data. In FIG. 8, when an uncorrectable error occurs by reading metadata (S20), the RAID controller 200 transmits a read command for the data chunk including an error to the nonvolatile memory device 100 (S21). That is, the RAID controller 200 transmits the read command for each sub-stripe data belonging to the data chunk (S21), and when the read command is transmitted to all planes (S22), the RAID controller 200 transmits an XOR enable command (S23).

When the sub-stripe data corresponding to the read command is output from the nonvolatile memory device 100 (S24), the RAID controller 200 inputs the output sub-stripe data to the parity plane (S25). All sub-stripe data belonging to the data chunk are input to the parity plane (S26). However, when any one of the sub-stripe data includes an uncorrectable error, only the remaining sub-stripe data except for the sub-stripe data including the error may be input to the parity plane.

The RAID controller 200 performs XOR computation for the sub-stripe data input from the parity plane and stores the XOR computation value in the parity plane. The RAID controller 200 outputs the XOR computation value stored in the parity plane (S27), and performs decoding for the parity data output from the parity plane (S28). The decoding operation includes, for example, an error correction code operation, a randomizing operation and the like.

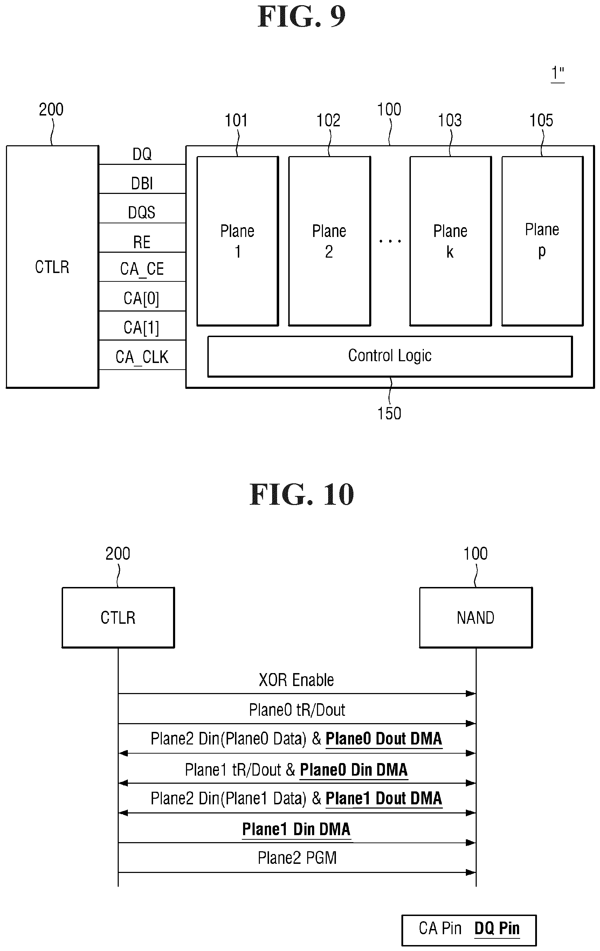

FIG. 9 illustrates an example of a RAID system 1" of FIG. 1 according to some implementations. In FIG. 9, the RAID system 1" may operate in a separate command/address mode (hereinafter, referred to as SCA mode) in accordance with some embodiments. Unlike the PIR mode described in FIGS. 2 to 8, in the SCA mode, a signal line for transmitting a command and a signal line for transmitting an address are independent of each other. Since the command signal line and the address signal line are separated from each other in the SCA mode, the RAID controller 200 may transmit a command or an address signal to a separate signal line even while accessing the nonvolatile memory device 100 through the DQ signal line.

For example, the RAID controller 200 may transmit and receive signals to and from the memory system 100 through a plurality of pins. The plurality of pins may transmit, for example, DQ, DBI, DQS, RE, CA_CE, CA[0], CA[1] and CA_CLK signals. Since the DQ, DBI, DQS and RE signals are redundant with the description of FIG. 2, their detailed description will be omitted.

CA_CE is a command address chip enable signal, which activates a predetermined nonvolatile memory device. CA[0] signal is a signal line for transmitting a command, CA[1] is a signal line for transmitting an address, and CA_CLK signal is a clock signal line for command and address signal lines. According to some implementations, CA[1:0] may be referred to as a command-address signal line, and the DQ signal line may be referred to as a data signal line.

The CA_CLK signal is an external clock signal provided by the RAID controller 200, and the nonvolatile memory device 100 may operate as a plurality of internal clocks by generating the CA_CLK signal as a phase shift or a divided internal clock. The CA[0] signal may operate in conjunction with any one of the plurality of internal clocks, and the CA[1] signal may operate in conjunction with another internal clock of the plurality of internal clocks.

FIG. 10 is a flow chart illustrating an example of an operation method of a RAID system according to some implementations. For convenience of description, for example, it is assumed that a data chunk A is stored in plane 0 and plane 1 as sub-stripe data A1 and A2, and parity data Ap is stored in plane 2.

In FIG. 10, the RAID controller 200 first transmits an XOR enable command for generating parity to the nonvolatile memory device 100 through a CA signal line (XOR Enable) and then transmits a read command, an output command and an address for plane 0 (Plane0 tR/Dout). The RAID controller 200 transmits a command to input data (Plane0 Data, A1) read from plane 0 to plane 2 and an address to the nonvolatile memory device 100 through the CA signal line (Plane2 Din(Plane0 Data)), and at the same time, the nonvolatile memory device 100 transmits data of plane 0 corresponding to the read command/output command to the RAID controller 200 through the DQ signal line (Plane 0 Dout DMA).

The RAID controller 200 transmits a read command and address for plane 1 to the nonvolatile memory device 100 through the CA signal line (Plane1 tR/Dout), and at the same time, the RAID controller 200 transmits the previously received data of plane 0 to the nonvolatile memory device 100 to correspond to the input command Plane2 Din (Plane 0 Din DMA).

The RAID controller 200 transmits a command to input the data (Plane1 Data, A2) read from Plane 1 to Plane 2 and an address to the nonvolatile memory device 100 through the CA signal line (Plane2 Din(Plane1 Data)). At the same time, the nonvolatile memory device 100 transmits the data of plane 1 corresponding to the read command/output command to the RAID controller 200 through the DQ signal line (Plane 1 Dout DMA).

The RAID controller 200 transmits the data of plane 1 received to correspond to the output command (Plane 1 tR/Dout) to the nonvolatile memory device 100 through the DQ signal line to correspond to the input command Plane2 Din (Plane 1 Din DMA).

The RAID controller 200 transmits a program command and an address of plane 2 to the nonvolatile memory device 100 (Plane 2 PGM). The plane 2 performs XOR computation for the received data A1 and A2 and stores the computation result.

That is, in the example of FIG. 10, after the read command is output to the plane, in which the data chunk is stored, through the CA signal line (first operation), when sub-stripe data corresponding to the read command is output through the DQ signal line (second operation), an operation of outputting an input command for the parity plane through the CA signal line is performed (third operation). After the first to third operations are performed until all sub-stripe data are completely read and input to the parity plane, the generated parity data are programmed.

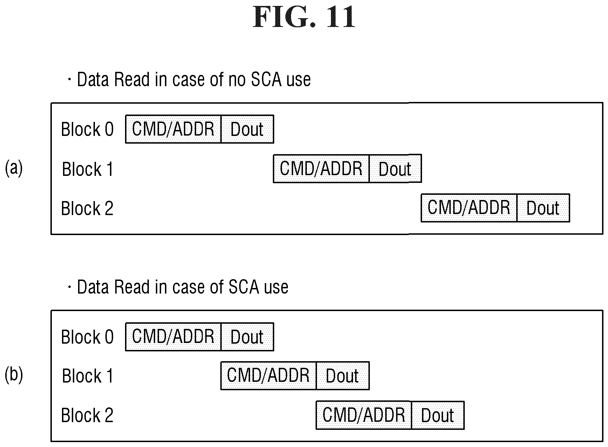

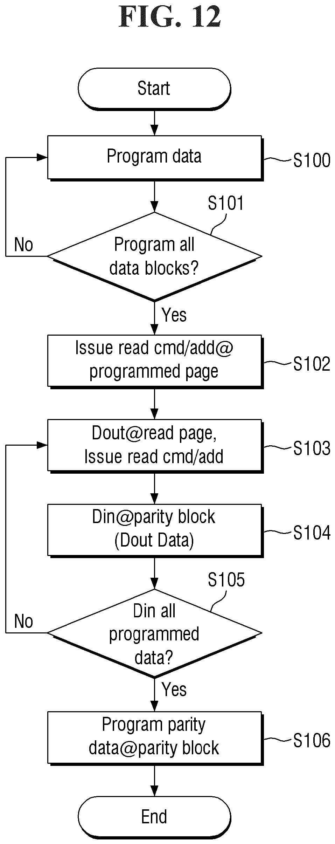

FIG. 11 is a signal view illustrating an example of a data read operation depending on an SCA mode, and FIG. 12 is a flow chart illustrating an example of an operation method of a RAID system in an SCA mode in accordance with some implementations.

When not in SCA mode, the RAID controller transmits and receives a command, an address and data to and from the nonvolatile memory device 100 through the DQ signal line. For example, as shown in FIG. 11(a), the RAID controller 200 transmits the command and the address to block 0 belonging to one nonvolatile memory device through the DQ signal line and receives corresponding data, transmits the command and the address to block 1 through the DQ signal line and receives the corresponding data, and transmits the command and the address to block 2 through the DQ signal line and receives the corresponding data. That is, when not in SCA mode, since the RAID controller transmits and receives the command, the address and the data by sharing the DQ signal line, the RAID controller cannot output the command and the address for block 1 to the nonvolatile memory device until transmission and reception of data for block 0 is completed.

However, in the SCA mode, the RAID controller is connected to the nonvolatile memory device 100 by separating the CA signal line for transmitting command/address from the DQ signal line for transmitting and receiving data.

For example, as shown in FIG. 11(b), the RAID controller 200 transmits the command and the address to block 0 belonging to one nonvolatile memory device through the CA signal line, and then transmits and receives the corresponding data through the DQ signal line. Even while the data of block 0 is being transmitted and received through the DQ signal line, the command and the address of block 1 may be transmitted through the CA signal line. That is, when the CA signal line is not in use, next command/address may be transmitted through the CA signal line even while a data signal is being transmitted and received through the DQ signal line.

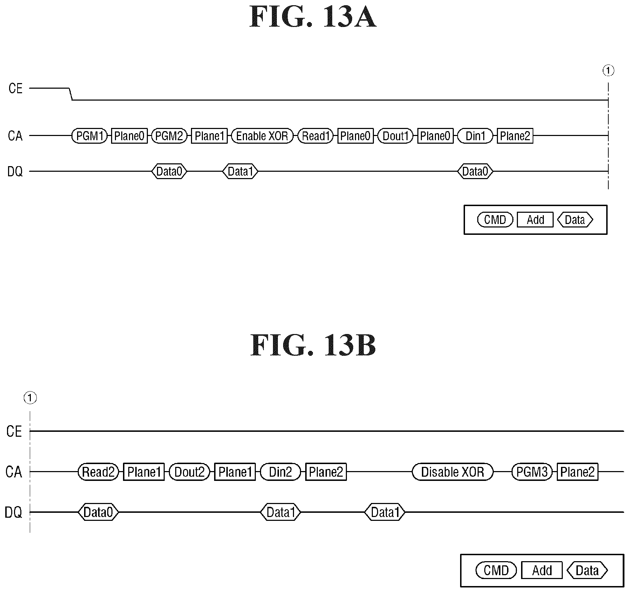

FIGS. 13A and 13B are signal views illustrating an example of an operation method of a RAID system according to some implementations. In FIG. 13a, it is assumed that a data chunk is stored in plane 0 and plane 1 in the SCA mode, and plane 2 is a parity plane.

The RAID controller 200 transmits a program command PGM1 and an address Plane 0 to plane 0 through a CA[0]CA[1] signal line (hereinafter, referred to as a CA signal line), and transmits a program command PGM2 and an address Plane1 to plane 1 through the CA signal line. At this time, the RAID controller 200 transmits data to be stored in each plane through the DQ signal line. For example, data DataO may be transmitted to the address Plane 0 of the nonvolatile memory device 100 through an independent DQ signal line even while the program command PGM2 and the address Plane1 are being transmitted to the CA signal line.

In order to generate parity data, the RAID controller 200 transmits an XOR enable command to the nonvolatile memory device 100. The XOR enable command is a command to perform XOR computation for data read from each plane in the parity plane, so as to generate parity data.

The RAID controller 200 transmits the read command and the output command to each plane, receives sub-stripe data from each plane through the DQ signal line to correspond to the order in which the output command is transmitted. Subsequently, the RAID controller 200 transmits an input command Din1 and an address Plane2 of the parity plane to transmit them to the parity plane through the CA signal line. For example, the RAID controller 200 transmits a read command Read1 and an address Plane 0 and an output command Dout1 and an address Plane 0 through the CA signal line. The nonvolatile memory device 100 outputs data DataO to the RAID controller 200 to correspond to the output command Dout1 through the DQ signal line. While the data DataO is being transmitted from the DQ signal line to the RAID controller, the CA signal line may simultaneously output next command (e.g., input command Din1) and address to the nonvolatile memory device 100.

In FIG. 13b, the CA signal and the DQ signal are transmitted and received subsequently to the signals of FIG. 13a. The RAID controller 200 transmits a read command Read2 and an address Plane 1, and an output command Dout2 and an address Plane 1 through the CA signal line. While the read command Read2 is being transmitted through the CA signal line, data DataO corresponding to the input command Din1 is transmitted from the RAID controller 200 to the nonvolatile memory device 100.

Subsequently, the RAID controller 200 outputs next command (e.g., input command Din2) and an address Plane 2 of a parity plane to the nonvolatile memory device 100 through the CA signal line. While the input command Din2 is being transmitted through the CA signal line, data data0 corresponding to the output command Dout2 is transmitted from the nonvolatile memory device 100 to the RAID controller 200.

When all sub stripe data belonging to the data chunk is received, the RAID controller 200 transmits a disable XOR command to the nonvolatile memory device 100 through the CA signal line and then transmits a program command PGM1 and an address Plane2 of the parity plane. The plane 2 in the nonvolatile memory device 100 programs (or writes) parity data Ap (=A0 XOR A1) to the plane 2 as a result of performing XOR computation for the previously received data DataO (e.g., A0) and Data1 (e.g., A1).

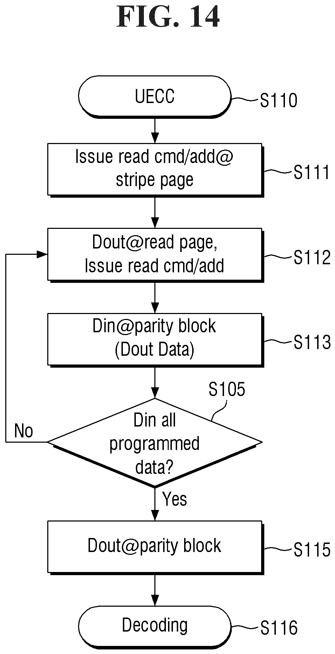

FIG. 14 is a flow chart illustrating an example of an operation method of a RAID system when the RAID system includes an uncorrectable error in accordance with some implementations. When at least one sub-stripe data of the data chunk includes an uncorrectable error, the RAID system 1 performs a correction recovery operation using parity data. In FIG. 14, when an uncorrectable error occurs by reading metadata (S 110), the RAID controller 200 transmits a read command and an address for the data chunk including the error to the nonvolatile memory device 100 through the CA signal line (S111). Subsequently, the RAID controller 200 transmits an output command to output the read sub-stripe data and an address to the nonvolatile memory device 100 through the CA signal line (S112).

When the nonvolatile memory device 100 outputs the corresponding sub-stripe data to the RAID controller 200 through the DQ signal line, the RAID controller 200 inputs the output sub-stripe data to the parity plane (S113). That is, the RAID controller 200 transmits the input command and the address of the parity plane to the CA signal line.

When all sub-stripe data are input to the parity plane (S105), the nonvolatile memory device 100 performs XOR computation for the input sub-stripe data and stores parity data generated by the XOR computation in the parity plane. The nonvolatile memory device 100 outputs and decodes the parity data stored in the parity plane (S116). The data corrected after decoding is used to recover the sub-stripe data having an uncorrectable error.

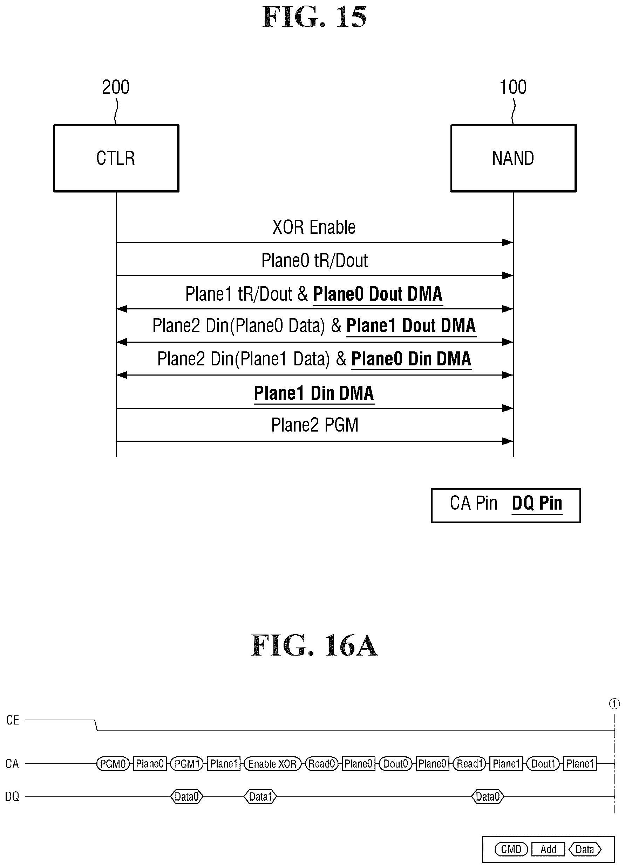

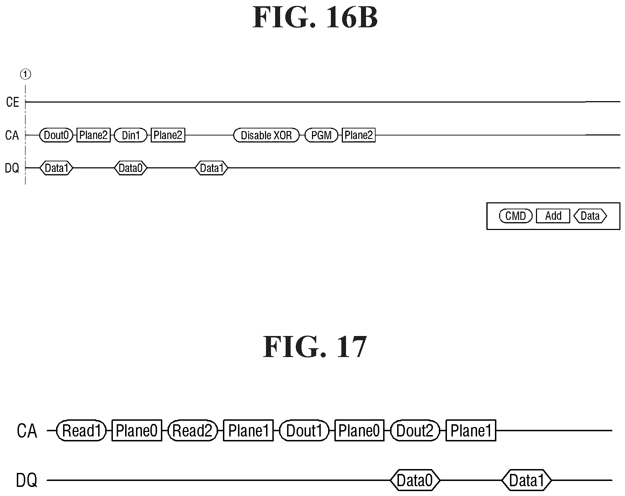

FIG. 15 is a flow chart illustrating an example of an operation method of a RAID system according to some implementations. For convenience of description, for example, it is assumed that a data chunk A is stored in plane 0 and plane 1 as sub-stripe data A1 and A2, and parity data Ap is stored in plane 2. Unlike FIG. 10, in the example of FIG. 16, the CA signal line and the DQ signal line are separated from each other to continuously output read commands for a plurality of planes in which the data chunk is stored, and when data are output to correspond to the continuous read commands, input commands for the parity plane are continuously output.

Referring to the shown example, the RAID controller 200 first transmits an XOR enable command for generating parity to the nonvolatile memory device 100 through the CA signal line (XOR Enable). The RAID controller 200 transmits a read command and an address for plane 0 to the nonvolatile memory device 100 through the CA signal line (Plane0 tR/Dout), and continuously transmits a reed command and an address for plane 1 (Plane1 tR/Dout).

When transmitting each read command, the RAID controller 200 outputs data A1 of plane 0 of the nonvolatile memory device 100 through the DQ signal line (Plane0 Dout DMA), and outputs data A2 of plane 1.

The RAID controller 200 transmits a command to input data (Plane0 Data, A1) read from plane 0 to plane 2 and an address to the nonvolatile memory device 100 through the CA signal line (Plane2 Din(Plane0 Data)), and continuously, transmits a command to input data (Plane1 Data, A2) read from plane 1 to plane 2 and an address (Plane2 Din(Plane1 Data)). Meanwhile, the RAID controller inputs data A1 of plane 0, which is output to plane 2, to plane 0 again through the DQ signal line (Plane 0 Din DMA), and continuously inputs data A2 of plane 1, which is output to plane 2, to plane 1 again (Plane 1 Din DMA).

The RAID controller 200 transmits a program command and an address of plane 2 to the nonvolatile memory device 100 through the CA signal line (Plane 2 PGM). The plane 2 performs XOR computation for the received data A1 and A2 and stores the computation result.

FIGS. 16A and 16B are signal views illustrating an example of an operation method of a RAID system according to the example of FIG. 15 according to some implementation. In FIGS. 15, 16A, and 16B, it is assumed that a data chunk is stored in plane 0 and plane 1 in the SCA mode, and plane 2 is a parity plane.

The RAID controller 200 transmits a program command PGM1 and an address Plane 0 to plane 0 through a CA[0]CA[1] signal line (hereinafter, referred to as a CA signal line), and transmits a program command PGM2 and an address Plane1 to plane 1 through the CA signal line. At this time, the RAID controller 200 transmits data to be stored in each plane through the DQ signal line. For example, the RAID controller 200 may transmit data DataO to the address Plane 0 of the nonvolatile memory device 100 through an independent DQ signal line even while the program command PGM1 and the address Plane1 are being transmitted to the CA signal line.

In order to generate parity data, the RAID controller 200 transmits an XOR enable (Enable XOR) command to the nonvolatile memory device 100. The RAID controller 200 transmits a read command Read0 and an address Plane 0, and an output command Dout and an address Plane 0 for read data of plane 0 through the CA signal line. The RAID controller 200 continuously transmits a read command Read1 and an address Plane 1, and an output command Dout and an address Plane1 for the read data of plane 1 through the CA signal line. While the read command Read1 is being output from the CA signal line, the nonvolatile memory device 100 may output the read data DataO of plane 0 to the RAID controller 200 through an independent DQ signal line.

When data are sequentially received through the DQ signal line, the RAID controller 200 immediately transfers the received data to the parity plane. For example, the RAID controller 200 outputs the input command Din0 and the address Plane2 through the CA signal line so as to input the data DataO of the plane 0 received by the output command Dout0 to the parity plane Plane2. While the input command Din0 and the address Plane2 are being output, the nonvolatile memory device 100 may output the read data Data1 of the plane 1 to the RAID controller 200 by the output command Dout1 through the independent DQ signal line.

When the data Data1 is received, in order to transmit the data Data1 to the parity plane, the RAID controller 200 outputs an input command Din1 and an address Plane2 through the CA signal line. That is, the CA signal line sequentially outputs an input command and an address for transmitting the data DataO and the data Data1 to the parity plane.

When all the sub-stripe data DataO and Data1 belonging to the data chunk are read and transmitted to the parity plane, the RAID controller 200 outputs an XOR disable command through the CA signal line (Disable XOR). Subsequently, the RAID controller 200 transmits a program command PGM1 and an address Plane3 of the parity plane. The nonvolatile memory device 100 programs (or writes) parity data Ap, which is a result of performing XOR computation of DataO and Data1, to plane 2.

FIG. 17 is a signal view illustrating an example of an operation method of a RAID system in a PIR mode and an SCA mode in accordance with some implementations. In FIG. 17, the RAID system may generate parity data or perform an error decoding operation in a state that both the PIR mode and the SCA mode are activated. That is, in the RAID system, as commands and addresses are transmitted through the CA signal line, data may be processed in parallel through the DQ signal line, and the commands and corresponding operations may be independently processed for each plane of the nonvolatile memory device.

For example, the RAID controller may continuously transmit a read command Read1 and an address Plane 0, a read command Read2 and an address Plane 1 through the CA signal line, and may continuously transmit an output command and an address to correspond to a transmission order of the read commands. That is, the RAID controller transmits an output command Dout1 and an address Plane 0, and an output command Dout2 and an address Plane 1 through the CA signal line.

The nonvolatile memory device may output data DataO stored in the address Plane0 in accordance with the order of receiving the output commands, and may output data Data1 stored in the address Plane1. Afterwards, although not shown, as described in FIG. 7c or 13b, the input command Din and the address Plane3 may be sequentially input, and the result of XOR computation of data may be stored in the parity plane Plane3 in accordance with the program command PGM and the address Plane3.

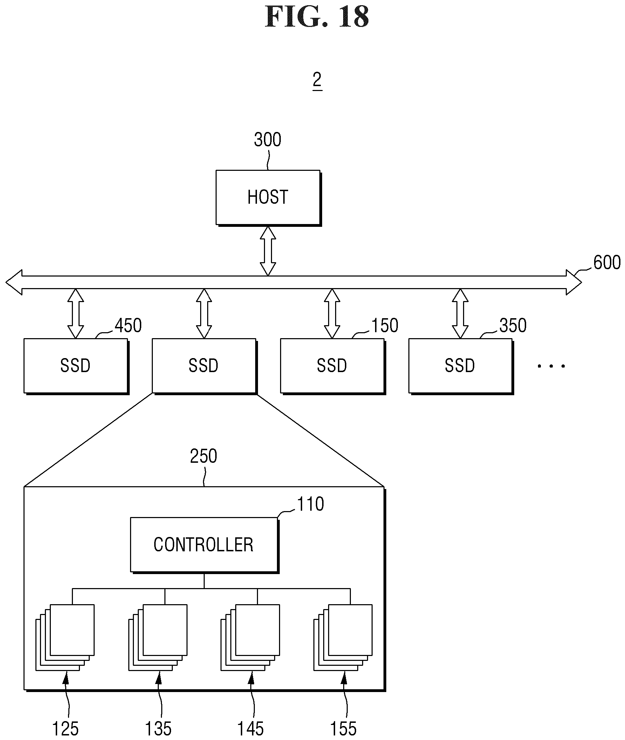

FIG. 18 is a block diagram illustrating an example of a RAID system 2 according to some implementations. In FIG. 18, the RAID system 2 includes a host 300, SSDs 150, 250, 350 and 450 and a bus 600. The host 300 may be configured and operated substantially the same as the RAID controller 200 described with reference to FIG. 1. The SSD 250 may include a plurality of memory devices 125, 135, 145 and 155 and a memory controller 110.

The memory controller 110 may control the plurality of memory devices 125, 135, 145 and 155. In some implementations, the plurality of memory devices 125, 135, 145 and 155 may have the same configuration and operation as the nonvolatile memories included in the memory system 100 included in the RAID system 1 described in the previous embodiment. Accordingly, the RAID system may be configured for the plurality of memory devices 125, 135, 145 and 155 by the memory controller 110.

Also, the plurality of memory devices 125, 135, 145 and 155 may include a memory device in which a data chunk and parity P are stored. The memory controller 110 may store parity data for the data chunk stored in the memory device for the RAID system configured as described above in the memory device. Also, when an error occurs in one of the plurality of memory devices 125, 135, 145 and 155, a rebuild operation of recovering data in which the error occurs may be performed using parity data.

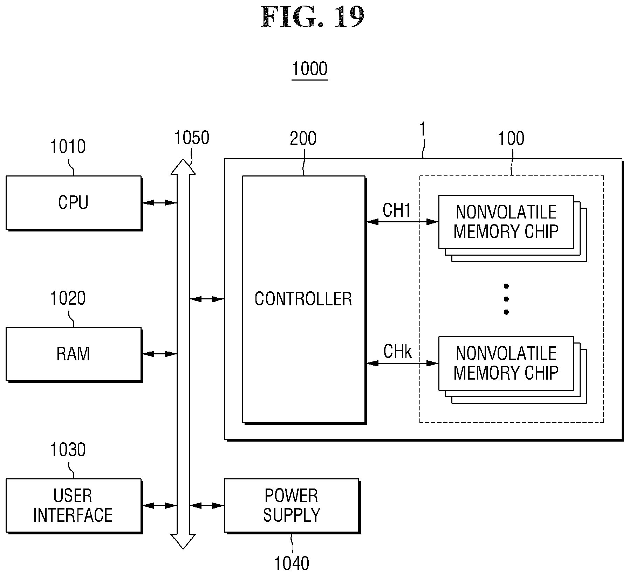

FIG. 19 is a block diagram illustrating an example of a computing system according to some implementations. In FIG. 19, a computing system 1000 may include a central processing unit 1010, a random access memory (RAM) 1020, a user interface 1030, a power supply 1040 and a memory system 1.

In this case, the memory system 1 may be a system in which the controller 200 controls the nonvolatile memory device 100 in accordance with the above-described implementations. The controller 200 may be connected to the nonvolatile memory device in each nonvolatile memory device 100 by a plurality of pins shown in FIG. 2 or FIG. 9.

The memory system 1 may be electrically connected to the central processing unit 1010, the RAM 1020, the user interface 1030 and the power supply 1040 through a system bus 1050. And, data provided through the user interface 1030 or processed by the central processing unit 1010 may be stored in the memory system 1.

Although FIG. 19 shows that the nonvolatile memory device 100 is connected to the system bus 1050 through the controller 200, in a computing system according to some implementations, the nonvolatile memory device 100 may be configured to be directly connected to the system bus 1050.

Even in the RAID system implemented by including only nonvolatile memory devices without a working memory in accordance with the above-described implementations, since parity data may be generated and stored in the parity plane through the PIR mode or the SCA mode, product reliability may be improved. In addition, since the read commands and the output commands may be sequentially transmitted to the current plane even before the data output of the other plane is completed, the RAID system with improved speed may be provided only with the nonvolatile memory.

While this disclosure contains many specific implementation details, these should not be construed as limitations on the scope of what may be claimed. Certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a combination can in some cases be excised from the combination, and the combination may be directed to a subcombination or variation of a subcombination.

## Claims

1. A redundant array of inexpensive disk (RAID) system comprising:
a plurality of nonvolatile memory devices including a plurality of planes for storing a data chunk and parity data; and
a RAID controller configured to access at least one of the nonvolatile memory devices in a plane independent read (PIR) mode,
wherein the RAID controller is configured to
transmit, to the at least one of the nonvolatile memory devices, a first read command and a first address,
transmit, to the at least one of the nonvolatile memory devices, a second read command and a second address,
transmit, to the at least one of the nonvolatile memory devices, an XOR enable command,
receive first data corresponding to the first address from a first plane of the plurality of planes, and receive second data corresponding to the second address from a second plane of the plurality of planes, and
transmit an input command and a third address to the at least one of the nonvolatile memory devices.

2. The RAID system of claim 1, wherein the RAID controller is configured to:
input the first data to a third plane of the plurality of planes, the third plane corresponding to the third address,
input the second data to the third plane corresponding to the third address, and
transmit a program command and the third address to the at least one of the nonvolatile memory devices.

3. The RAID system of claim 2, wherein the third plane is configured to program a result of XOR computation for the first data and the second data to the third address.

4. The RAID system of claim 2, wherein the RAID controller is configured to
transmit an XOR disable command to the at least one of the nonvolatile memory devices, and
transmit, to the at least one of the nonvolatile memory devices, the program command based on all sub-stripe data of the data chunk being input to the third plane.

5. The RAID system of claim 1, wherein the RAID controller is configured to
sequentially transmit a read command and an address to each of the plurality of planes, and
sequentially transmit the address and an output command of sub-stripe data corresponding to the address to the plurality of planes in an order in which the read command is transmitted.

6. The RAID system of claim 5, wherein the RAID controller is configured to transmit the second read command and the second address to the second plane before transmitting a first output command and the first address to the first plane.

7. The RAID system of claim 6, wherein the RAID controller is configured to transmit a second output command and the second address to the second plane after transmitting the first output command and the first address.

8. A RAID system comprising:
a plurality of nonvolatile memory devices including a plurality of planes for storing a data chunk and parity data;
a RAID controller configured to access at least one of the nonvolatile memory devices through an independent command-address signal line (CA) and a data signal line (DQ),
wherein the RAID controller is configured to
transmit an XOR enable command to the command-address signal line, transmit a first read command and a first address to the command-address signal line,
output a first output command and the first address,
transmit a second read command and a second address to the command-address signal line,
output a second output command and the second address,
receive first data corresponding to the first address from a first plane and second data corresponding to the second address from a second plane through the data signal line, and
transmit an input command and a third address through the command-address signal line.

9. The RAID system of claim 8, wherein the RAID controller is configured to receive the first data through the data signal line while receiving a first input command and the third address through the command-address signal line.

10. The RAID system of claim 9, wherein the RAID controller is configured to receive the second data through the data signal line while receiving a second input command and the third address through the command-address signal line.

11. The RAID system of claim 10, wherein the RAID controller is configured to
transmit the second data to a third plane through the data signal line, and transmit a program command and a third address to a third plane through the command-address signal line.

12. The RAID system of claim 11, wherein the RAID controller is configured to program a result of XOR computation for the first data and the second data to the third plane corresponding to the third address.

13. A RAID system comprising:
a nonvolatile memory device including a normal plane and a parity plane; and
a RAID controller configured to individually performing a read operation for each of the normal plane and the parity plane,
wherein the RAID controller is configured to
read first sub-stripe data of a first normal plane and second sub-stripe data of a second normal plane,
input the first sub-stripe data and the second sub-stripe data to the parity plane, and
program parity data obtained by XOR computation for the first sub-stripe data and the second sub-stripe data to the parity plane.

14. The RAID system of claim 13, wherein the RAID controller is configured to
transmit a first read command and a first address to the first normal plane,
transmit a second read command and a second address to the second normal plane, and
transmit an XOR enable command to the nonvolatile memory device.

15. The RAID system of claim 14, wherein the RAID controller is configured to
transmit a first output command and the first address to the first normal plane to receive the first sub-stripe data corresponding to the first address, and
transmit a first input command, a third address, and the first sub-stripe data to the parity plane.
